# EUROPÄISCHE PATENTANMELDUNG

(11) **EP 1 136 227 A2**
(43) Veröffentlichungstag der Anmeldung: **26.09.2001**
(21) Anmeldenummer: 01106222.1
(22) Anmeldetag: 14.03.2001
(51) Int. Cl.: B29C 47/16, B29C 47/92

(54) **Stellvorrichtung**

(30) Priorität: 15.03.2000 AT 4262000
(71) Anmelder: XENON Technologie- und Qualitätsberatung GmbH, 4580 Windischgarsten (AT)
(72) Erfinder: Stempfer, Ferdinand, Ing., 2020 Hollabrunn (AT)
(74) Vertreter: Secklehner, Günter, Dr.

(57) **Zusammenfassung**

Die Erfindung betrifft eine Stellvorrichtung (1) mit einer Halteeinrichtung (4) und zumindest einem Stellelement (2) sowie mit zumindest einer Heiz- und/oder Kühleinrichtung (3). Das Stellelement (2) steht in Wirkverbindung mit der Heiz- und/oder Kühleinrichtung (3). Letztere ist als Halbleiterbaustein (8), insbesondere als Peltier-Element ausgebildet.

## Beschreibung

Die Erfindung betrifft eine Stellvorrichtung, eine Düse sowie ein Verfahren zur Veränderung der Breite eines Austrittsspaltes einer Düse entsprechend den Merkmalen in den Oberbegriffen der Ansprüche 1, 26 und 35.

Die Herstellung von Kunststoffolien erfolgt u.a. mit Hilfe von sogenannten Breitschlitzdüsen, welche an einem Extruderausgang angeordnet werden. Diese Breitschlitzdüsen bestehen üblicherweise aus einem oberen und einem unteren Düsenteil, zwischen denen ein der Dicke der Kunststoffolie entsprechender Austrittsspalt gebildet wird. Im Bereich der Düsenlippen, also am in Extrusionsrichtung gesehen vorderen Ende der Breitschlitzdüse, weist der obere oder untere Düsenteil eine entsprechende Querschnittsverjüngung auf, wodurch die Düsenlippe durch Beaufschlagung mit einer Druckkraft gegen die jeweils andere Düsenlippe elastisch verstellt werden kann und damit die Höhe des Austrittsspaltes in gewissen Grenzen eingestellt werden kann. Die Grobeinstellung der Breitschlitzdüsen erfolgt üblicherweise manuell und wird damit eine entsprechende Spalthöhe vorgegeben. Mit Hilfe von Stellelementen wird diese Spalthöhe auf einem einigermaßen konstanten Niveau gehalten.

Für die Erzeugung der notwendigen Druckkräfte wurden im Stand der Technik verschiedenste Stellvorrichtungen vorgeschlagen, bei denen man sich die Eigenschaft der Metalle, sich bei Temperaturerhöhung auszudehnen, zunutze macht. So ist aus der DE 40 41 069 A eine Breitschlitzdüse eines Extruders zur Herstellung von Flachfolien bekannt, die einen Wärmedehnbolzen aufweist, mit dessen Hilfe Dickenabweichungen der Flachfolien von einer vorgegebenen mittleren Dicke innerhalb gewünschter Toleranzgrenzen liegen können. Dazu wird dieser Wärmedehnbolzen mit Wärme beaufschlagt und dadurch eine Verformung der Düsenlippe entsprechend einer gewünschten Biegelinie erreicht. Um zu verhindern, daß die in den Wärmedehnbolzen eingebrachte Wärme über diesen selbst auf die obere Düsenlippe, der der Wärmedehnbolzen zugeordnet ist, und in der Folge auch in den Düsenunterteil übertragen wird, ist der Wärmedehnbolzen im Bereich der Abstützung auf dem flexiblen Bereich der Düsenlippe mit einem Wärme schlecht leitenden Kopf und/oder mit einer Schicht aus wärmeisolierendem Material versehen.

Aus der EP 0 456 176 A ist eine Breitschlitzdüse bekannt, bei der die Wärme über einen Heizdraht in den Stellbolzen eingebracht wird und über einen Kühlkanal, welcher von einem gasförmigen Kühlmedium durchströmt wird, bei Bedarf wieder abgeführt werden kann. Anstelle des Heizdrahtes kann auch ein Heizstab verwendet werden.

Aus der AT 392 934 B ist eine Breitschlitzdüse für Strangpreßvorrichtungen bekannt, bei der die Verstellung über eine mit Druckflüssigkeiten beaufschlagbare Zylinder-Kolben-Einheit erfolgt.

Aus der EP 0 229 680 B ist eine Strangpreßmatrize bestehend aus zwei Lippen bekannt, bei der die Lippenöffnung über Verstellelemente, welchen Heizelemente zugeordnet sind, eingestellt wird. Diese Heizelemente sind als Heizstäbe innerhalb der Stellelemente ausgebildet. Zur Abführung der Wärme und damit zur Abkühlung der Verstellelemente - um eine Vergrößerung des Austrittsspaltes zu ermöglichen - sind den Stellelementen Kühlblöcke zugeordnet, wobei die Kühlkanäle orthogonal zu den Verstellelementen verlaufen.

Nachteilig an diesen Stellvorrichtungen ist, daß sie vor dem Produktionsbetrieb der Anlage auf eine bestimmte Temperatur erwärmt werden müssen, um damit einigermaßen reproduzierbare Ergebnisse zu erhalten, und gleichzeitig auch die Kühlung mit Maximalleistung betrieben werden muß, um einigermaßen rasch auf sich verändernde Dickentoleranzen reagieren zu können.

Aufgabe der Erfindung ist es, eine Verstellvorrichtung, eine Düse sowie ein Verfahren der eingangs genannten Art zu schaffen, mit deren Hilfe die Verstellbarkeit verbessert werden kann.

Diese Aufgabe wird durch die Stellvorrichtung entsprechend den Merkmalen im Kennzeichenteil des Anspruches 1 gelöst. Vorteilhaft ist daran, daß mit Hilfe des Halbleiterbausteins, insbesondere des Peltier-Elementes, eine rasche und genaue Temperierung bzw. Temperaturregelung des Stellelementes möglich ist, wodurch sehr rasch auf geänderte Bedingungen reagiert werden kann. Vorteilhaft ist weiters, daß bei Verwendung von Peltier-Elementen die Leistungsaufnahme bei einer Längenänderung von 0 µm 0 Watt beträgt, da mit Hilfe der Peltier-Elemente sowohl die Heizung als auch die Kühlung des Stellelementes möglich ist und daher nicht ein bestimmtes Temperaturniveau aufrechterhalten werden muß, um eine entsprechende Korrektur in Richtung der Verkürzung des Stellelementes durchführen zu können. Damit läßt sich nicht nur der Energieverbrauch senken, sondern es wird zudem weiters möglich, auf zusätzliche Kühlmittel zu verzichten - um eine entsprechende Kühlleistung aufgrund der erforderlichen 50 %-igen Grundheizleistung bei Stellelementen nach dem Stand der Technik zur Verfügung zu stellen -, da in Abhängigkeit von der Stromrichtung die erforderliche Kühlung bzw. Kälte durch die Heiz- und/oder Kühleinrichtung selbst erzeugt wird. Es können damit aber auch sehr große Verstellbereiche (im Vergleich zum Stand der Technik) erzielt werden.

Vorteilhaft ist weiters eine Ausbildung entsprechend Anspruch 2, da damit der Verstellbereich sowie die Verstellkraft vergrößert werden können und zudem die Stellvorrichtung einfach an unterschiedlichste Anwendungsfälle angepaßt werden kann.

Durch die Weiterbildung entsprechend Anspruch 3 wird eine sehr kompakte Bauweise erhalten, sodaß sich die erfindungsgemäße Stellvorrichtung auch für die Nachrüstung von z.B. älteren Düsen oder Werkzeugmaschinen oder dgl., wo eine entsprechende Einstellung bzw. Zustellung des Werkzeuges durchgeführt wird, möglich ist.

Es ist dabei auch eine Weiterbildung entsprechend Anspruch 4 von Vorteil, mit der ein sehr ausgewogenes Verhältnis der erzeugten Kräfte im Druckelement in bezug auf das Zugelement erzeugt werden kann.

Von Vorteil ist weiters eine Weiterbildung entsprechend Anspruch 5, mit der eine gegenseitige thermische Beeinflussung des Druckelementes und des Zugelementes verhindert werden kann, wodurch die Regelbarkeit und die Stabilität der Regelstrecke weiter verbessert werden kann.

Es ist weiters eine Ausführungsvariante entsprechend Anspruch 6 vorteilhaft, mit der erreicht werden kann, daß insbesondere dann, wenn die Stellvorrichtung an heißen Oberflächen eingesetzt wird, eine Eintragung von Wärme von diesen heißen Oberflächen in den geregelten Teil des Zugelementes verhindert werden kann. Gleichzeitig ist es damit auch möglich, daß umgekehrt dazu negative Effekte in bezug auf die Regelung aufgrund von Wärmeübertragung an die Umgebung des Zugelementes verhindert werden können.

Von Vorteil ist dabei weiterhin, die Stellvorrichtung entsprechend der Ausführungsvariante nach Anspruch 7 auszubilden, wonach die thermische Trennung bereits außerhalb der Ausnehmung des Druckelementes erfolgt und somit auch ein Übertragen von Wärmeenergie in das Druckelement verhindert werden kann.

Vorteilhaft ist weiters, wenn entsprechend Anspruch 8 die thermische Trennung über einen Keramikbauteil erfolgt, da damit Bauteile mit einer schlechten Wärmeleitfähigkeit zur Verfügung gestellt werden können, die hohe Druckfestigkeiten aufweisen können. Darüber hinaus können diese Bauteile in einfacher Weise in unterschiedlichsten Geometrien aus den Grünlingen gefertigt werden, sodaß eine universelle Anpaßbarkeit dieser Trennung möglich ist.

Es ist weiters von Vorteil, wenn entsprechend den Ansprüchen 9 bis 11 das Zugelement und/oder das Druckelement zumindest teilweise von einem Isolierelement umgeben sind und damit die Stellvorrichtung an unterschiedlichste Einsatzzwecke angepaßt werden kann, insbesondere an das Temperaturverhalten der Umgebung der Stellvorrichtung.

Vorteilhaft ist dabei wiederum, wenn das Isolierelement mit einem Werkstoff entsprechend Anspruch 12 gebildet wird, da damit hohe Druckfestigkeiten erreicht werden können.

Es ist weiters von Vorteil, das Isolierelement entsprechend Anspruch 13 auszubilden, da dadurch über dem Stellelement 2 ein Kanal gebildet werden kann, in dem gegebenenfalls ein Kühlmedium befördert werden kann.

Vorteilhaft sind auch Weiterbildungen nach den Ansprüchen 14 und 15, womit ein einfacher Wärmeabtransport mit einfachen Mitteln aus dem Stand der Technik gebildet werden kann. Darüber hinaus kann damit erreicht werden, daß die an den Stellelementen 2 gebildete Kühlluft gleichmäßig über das gesamte Stellelement verteilt wird, sodaß kein externes Kühlaggregat erforderlich ist.

Von Vorteil ist weiters eine Ausgestaltung nach Anspruch 16, womit die unterschiedliche Temperaturregelung des Zug- und des Druckelementes verbessert werden kann.

Es ist weiters eine Ausgestaltung entsprechend Anspruch 17 möglich, wonach die mit dem Halbleiterbaustein erzeugte Kühlluft nicht nur rasch in das Stellelement selbst übertragen werden kann, sondern gleichzeitig auch über die Oberfläche des Stellelementes eine gleichmäßige Temperierung erfolgen kann.

Von Vorteil ist aber auch eine Ausgestaltung entsprechend den Ansprüchen 18 oder 19, da durch die Erfassung der Temperaturwerte und die Messung der Stromaufnahme am Stellelement eine Diagnosemöglichkeit zur Überwachung eventuell auftretender Schäden oder Fehler der Stellvorrichtung ermöglicht wird.

Es ist weiters eine Weiterbildung entsprechend Anspruch 20 möglich, mit der Längenänderungen direkt über Widerstandsänderungen in einem Dehnmeßstreifen verfolgt werden können.

Durch die Ausgestaltung entsprechend Anspruch 21 kann der Vorteil erreicht werden, daß aufgrund der schnellen Verteilung eines Kühlmediums, beispielsweise Luft, die Geschwindigkeit der Einstellung bzw. des Abgleichs einer auftretenden Soll/Istdifferenz erhöht werden kann.

Durch die Weiterbildung entsprechend Anspruch 22 kann der Vorteil erreicht werden, daß eine manuelle Voreinstellung in der Stellvorrichtung mit sehr großer Genauigkeit durchgeführt werden kann.

Es ist weiters eine Ausgestaltung entsprechend den Ansprüchen 23 und 24 von Vorteil, mit der aufgrund einer Vorspannung der Gewindespindel eine Spielfreistellung im Gewinde erreicht werden kann.

Es ist weiters möglich, die Regelung der Stellgröße über einen PID-Regler entsprechend Anspruch 25 durchzuführen, da damit ein Überschwingen bei Erreichen des Sollwertes, d.h. der Sollänge des Stellelementes, verhindert werden kann und daher eine Querprofilregelung nicht dauernd nachregeln muß. Die gesamte Regelcharakteristik wird dadurch verbessert und stabiler.

Die Aufgabe der Erfindung wird weiters durch eine Düse entsprechend den Merkmalen im Kennzeichenteil des Anspruches 26 gelöst. Von Vorteil ist dabei nicht nur, daß durch die Anordnung der erfindungsgemäßen Stellvorrichtung die Zeitdauer für die Nachstellung eines Düsenteils bei einer Normabweichung rasch erfolgen kann und damit die Qualität des mit der Düse erzeugten Produktes verbessert werden kann und zudem Material gegebenenfalls eingespart werden kann, sondern weiters durch diese rasche Verstellbarkeit auch ein Reinigen der Düse während der Produktion durch Vergrößern einer Spalthöhe zwischen den Düsenteilen ermöglicht wird, wobei nach erfolgter Reinigung die Ausgangsstellung aufgrund der hinterlegten Werte sehr rasch wieder erreicht werden kann und somit die Produktion nur über einen sehr kurzen Zeitraum gestört wird.

Von Vorteil ist dabei die Ausgestaltung der Düse entsprechend Anspruch 27, da dadurch nur geringe thermische Ausdehnungsveränderungen, bedingt durch thermisches Schwanken der Düsentemperatur am gegebenenfalls nicht geregelten Teil des Stellelementes, erreicht werden können.

Es ist weiters eine Ausbildung entsprechend Anspruch 28 möglich, wodurch die Gleichmäßigkeit der Verstellung der Düse bzw. des Düsenteils verbessert werden kann.

Durch Weiterbildungen entsprechend den Ansprüchen 29 und 30 kann der Vorteil erreicht werden, daß die geregelten, temperierten Teile der Stellvorrichtung bzw. Stellvorrichtungen von Umgebungseinflüssen, insbesondere Temperatureinflüssen, von der Düse selbst weitestgehend abgeschirmt werden können.

Durch die Anordnung einer Fördereinrichtung am bzw. im Gehäuse entsprechend Anspruch 31 kann eine gleichmäßige Kühlluftverteilung im Gesamtsystem durch eine symmetrische Kühlluftanströmung erreicht werden, insbesondere dann, wenn weiters jede angeordnete Stellvorrichtung über eine zusätzliche Kühlluftverteilung, beispielsweise in Form einer weiteren Fördereinrichtung, verfügt.

Mit einer Weiterbildung entsprechend Anspruch 32 kann der Vorteil erreicht werden, daß die für eine gegebenenfalls unerwünschte Wärmeübertragung von der Düse in die Stellvorrichtung zur Verfügung stehende Kontaktfläche verringert werden kann und ist es darüber hinaus möglich, die Düse gegebenenfalls vor mechanischen Beschädigungen durch das Stellelement zu schützen.

Vorteilhaft ist weiters eine Ausgestaltung entsprechend Anspruch 33 bzw. 34, mit der die Steuerung bzw. Regelung der Stellvorrichtung(en) mit einem Leitrechner und damit die schnelle Anpaßbarkeit von Abweichungen einzelner Stellvorrichtungen untereinander möglich wird. Bei entsprechender busfähiger Ausführung können auf vorteilhafte Weise mehrere Stellelemente von der gleichen Leitrechnerkonfiguration angesteuert werden.

Die Aufgabe wird weiters auch durch ein Verfahren entsprechend den Merkmalen im Kennzeichenteil des Anspruches 35 gelöst. Von Vorteil ist dabei, daß mit diesem Verfahren eine Veränderung der Breite des Austrittsspaltes einer Düse sofort durchgeführt werden kann, ohne daß das jeweilige Stellelement eine gewisse Zeitspanne benötigt, um die erforderliche Temperatur zu erreichen und diese Temperatur stabil hält. Es ist damit nicht erforderlich, der Stellvorrichtung ständig Energie zur Wärmeerzeugung zuzuführen, wie dies beispielsweise bei den Stellvorrichtungen aus dem Stand der Technik der Fall ist, wo eine 50 %-ige Heizleistung ständig aufrecht erhalten werden muß, um auch negative Längenänderungen zu ermöglichen.

Zum besseren Verständnis wird die Erfindung anhand der nachfolgenden Darstellungen näher erläutert.

Es zeigen:
- Fig. 1: eine erfindungsgemäße Stellvorrichtung in schematisch vereinfachter Darstellung;
- Fig. 2: eine Ausführungsvariante der erfindungsgemäßen Stellvorrichtung in schematisch vereinfachter Darstellung;
- Fig. 3: eine weitere Ausführungsvariante der Stellvorrichtung mit einem Zug- und einem Druckelement in Draufsicht;
- Fig. 4: die Stellvorrichtung nach Fig. 3 in Seitenansicht und schematisch vereinfachter Darstellung;
- Fig. 5: eine Ausführungsvariante des Stellelementes in schematisch vereinfachter Darstellung;
- Fig. 6: eine erfindungsgemäße Düse mit montierter Stellvorrichtung in Seitenansicht, geschnitten und in schematisch vereinfachter Darstellung;
- Fig. 7: eine Gegenüberstellung des Temperaturverlaufes einer erfindungsgemäßen Stellvorrichtung und einer aus dem Stand der Technik bekannten Stellvorrichtung.

Einführend sei festgehalten, daß in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

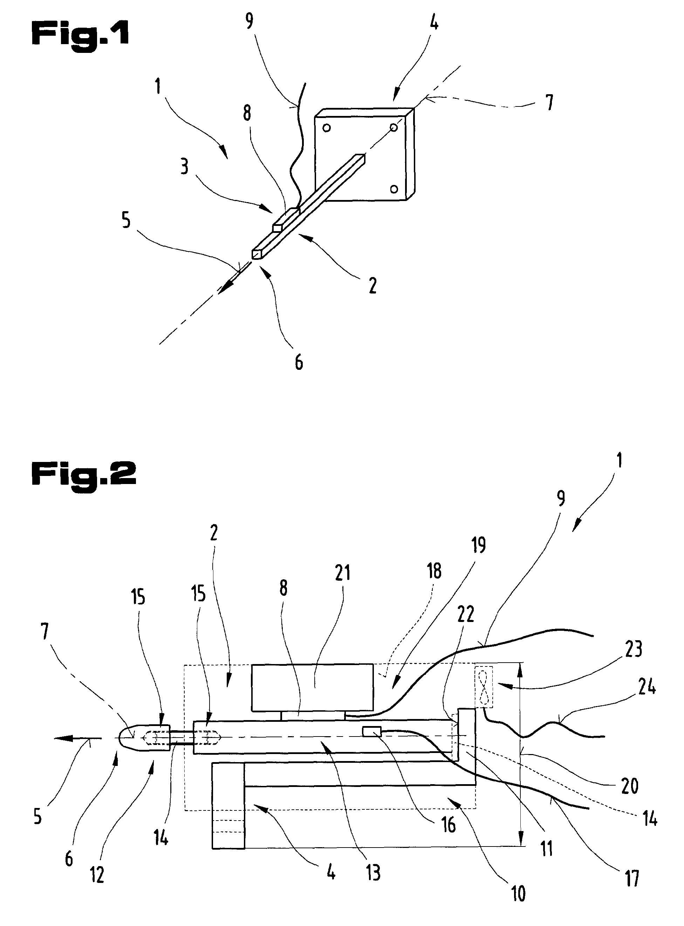

Fig. 1 zeigt schematisch vereinfacht eine Stellvorrichtung 1, bestehend aus einem Stellelement 2, einer Heiz- und/oder Kühleinrichtung 3 sowie einer Halteeinrichtung 4. Die Stellvorrichtung 1 ist zur Kraftübertragung ausgebildet, indem das Stellelement 2 aus einem längenveränderlichen Werkstoff gebildet ist. Die Längenveränderung wird durch Erwärmen des Stellelementes 2 erreicht, wodurch sich das Stellelement 2 ausdehnt und eine Kraft in Richtung eines Pfeils 5 ausübt. Damit diese Kraft zum Großteil in die angegebene Richtung übertragen wird, ist die Halteeinrichtung 4 bewegungsfest mit einem nicht dargestellten Element, z.B. einem Werkzeug, an dem eine Verstellung erfolgen soll, verbunden, auf dem sich die Stellvorrichtung 1 abstützt.

Je nach den zu übertragenden Kräften können als Werkstoffe für das Stellelement 2 Metalle, Legierungen, Kunststoffe oder dgl. verwendet werden. Vorzugsweise werden als Werkstoff für das Stellelement 2 solche mit hoher Wärmeleitfähigkeit verwendet, beispielsweise Aluminium bzw. Aluminiumlegierungen, legiert mit Zink und/oder Magnesium und/oder Kupfer. Selbstverständlich sind aber auch andere Metalle bzw. Metallegierungen möglich und sind daher die angeführten Werkstoffe nicht erschöpfend zu verstehen.

Das Stellelement 2 selbst kann, wie in Fig. 1 gezeigt, als Stab mit beliebigem Querschnitt, z.B. rechteckig, quadratisch, rund, oval oder dgl. ausgebildet sein bzw. ist es auch möglich, zumindest einen Druckbereich 6, welcher der Halteeinrichtung 4 entlang einer Längsmittelachse 7 gegenüberliegend am vorderen Ende des Stellelementes 2 angeordnet ist, auch rohrförmig auszubilden.

Als Heiz- und/oder Kühleinrichtung 3 wird vorzugsweise ein Halbleiterbaustein 8, insbesondere ein Peltier-Element verwendet. Dieser Halbleiterbaustein 8 ist in Wirkverbindung mit dem Stellelement 2 auf diesem angeordnet, beispielsweise direkt auf der Oberfläche des Stellelementes 2. Durch diese Heiz- und/oder Kühleinrichtung 3 kann in das Stellelement 2 Wärme übertragen werden bzw. ist es bei Ausbildung als Peltier-Element auch möglich, das Stellelement 2 zu kühlen.

Halbleiterbausteine 8 in Form von Peltier-Elementen sind bereits aus dem Stand der Technik bekannt. Diese thermoelektrischen Kühlsysteme werden auch als Solid-State-Wärmepumpen bezeichnet. Sie enthalten vorteilhafterweise keine beweglichen Teile sowie keine Flüssigkeiten und Gase zur Kühlung. Ihre Wirkungsweise entspricht im wesentlichen der Umkehr des thermoelektrischen Effektes, der z.B. bei Thermoelementen verwendet wird.

Peltier-Elemente bestehen aus zwei Halbleiterbrücken, z.B. aus Wismut-Tellurid, unterschiedlicher Dotierung. Im N-Typ Material besteht ein Elektronenüberschuß, im P-Typ Material ein Elektronendefizit. Durch Stromfluß angeregt, transportieren die Elektronen Wärmeenergie von der gemeinsamen Verbindungsstelle weg oder zu dieser hin. Die transportierte Wärmeenergie ist proportional zum Strom. Je nach Stromrichtung kann also mit Hilfe des Peltier-Elementes dem Stellelement 2 Wärme zugeführt oder dieses Stellelement 2 abgekühlt werden. Somit kann die Längendehnung des Stellelementes 2 regelbar in Abhängigkeit von der Größe des Stroms ausgebildet werden. In der Folge ist es damit möglich, daß in Abhängigkeit von der Längenänderung des Stellelementes 2 über den Druckbereich 6 unterschiedliche Kräfte bzw. Drücke auf in Fig. 1 nicht dargestellte Teile von Vorrichtungen übertragen werden.

Selbstverständlich ist es möglich, daß in dem Halbleiterbaustein 8 mehrere Peltier-Elemente zu einem sogenannten Peltier-Modul zusammengefaßt sind, wodurch der Effekt verstärkt und damit die Regelbarkeit verbessert, insbesondere deren Geschwindigkeit erhöht werden kann.

Selbstverständlich kann der Halbleiterbaustein 8 an jeder beliebigen Stelle am Stellelement 2 angeordnet sein.

Der Halbleiterbaustein 8 kann über eine Leitung 9 an eine nicht gezeigte Energieversorgung angeschlossen sein.

Fig. 2 zeigt schematisch vereinfacht eine Ausführungsvariante der Stellvorrichtung 1 in Seitenansicht. Es soll mit dieser Fig. verdeutlicht werden, daß die Halteeinrichtung 4 nicht zwingend an dem dem Druckbereich 6 gegenüberliegenden Ende des Stellelementes 2 angeordnet sein muß. Vielmehr kann bei geeigneter Ausbildung diese Halteeinrichtung 4 auch im Bereich des Druckbereiches 6 angeordnet werden. Dazu kann die Halteeinrichtung 4 beispielsweise ein L-förmiges Profil 10 aufweisen, wobei sich das Stellelement 2 auf einem Schenkel 11 des Profils 10 abstützen kann, sodaß wiederum eine Kraftübertragung vorwiegend in Richtung des Pfeiles 5 über den Druckbereich 6 möglich ist. Andere Ausführungsvarianten der Halteeinrichtungen 4 sind selbstverständlich möglich und richten sich diese nach dem jeweiligen Verwendungszweck bzw. der Montagesituation der Stellvorrichtung 1 auf bzw. in der Nähe des jeweils zu verstellenden Bauteils.

Wie Fig. 2 zeigt, kann das Stellelement 2 zumindest zweiteilig ausgeführt sein, wobei vorzugsweise ein erster kraftübertragender Teil 12 mit einem weiteren Teil 13 über zumindest eine thermische Trennung 14 verbunden werden kann. Diese thermische Trennung 14 ist vorzugsweise aus einem Wärme schlecht leitenden Werkstoff, beispielsweise Glimmer, verschiedenste Keramiken wie z.B. Aluminiumoxyd-, Zirkonoxydkeramiken, Glaskeramiken oder dgl. gebildet. So ist es beispielsweise möglich, daß sowohl der erste Teil 12 als auch der weitere Teil 13 mit einem Innengewinde 15 versehen sind und die thermische Trennung 14 in Art eines Gewindestabes ausgebildet ist, welcher in die beiden Innengewinde 15 eingreift. Selbstverständlich ist es aber auch möglich, die Verbindung über andere Techniken herzustellen, beispielsweise durch Kleben.

Es ist des weiteren möglich, daß nicht nur eine thermische Trennung 14 im Bereich zwischen den beiden Teilen 12 und 13 des Stellelementes 2 angeordnet ist, sondern auch in jenem Bereich des Stellelementes 2, der sich auf der Halteeinrichtung 4, beispielsweise auf dem Schenkel 11 des L-förmigen Profils 10 abstützt. Damit wird auf vorteilhafte Weise erreicht, daß einerseits die Temperatureinflüsse aus der Umgebung der Stellvorrichtung 1 auf das Stellelement 2 verringert werden können und ist es andererseits möglich, daß bei Erwärmung des Teiles 13 des Stellelementes 2 bzw. dessen Abkühlung keine Wärme an den Teil 12 des Stellelementes 2 bzw. an die Halteeinrichtung 4 übertragen wird bzw. über diese Bauteile in den Teil 13 des Stellelementes 2 eindringt. Es kann damit auch auf vorteilhafte Weise erreicht werden, daß mit der Stellvorrichtung 1 zu verstellende Bauteile nicht den Temperaturschwankungen des Stellelementes 2 ausgesetzt sind.

Der Halbleiterbaustein 8 ist wiederum an der Oberfläche des Stellelementes 2, insbesondere des Teiles 13 angeordnet und über die Leitung 9 mit der Energieversorgung verbunden. Diese Energieversorgung kann rechnergesteuert erfolgen, wozu beispielsweise eine entsprechende Regelung der Stromstärke bzw. Stromrichtung mittels Software realisiert werden kann. Andere Regelungen sind selbstverständlich möglich. In diesem Zusammenhang ist es vorteilhaft, wenn der Rechner weiters mit einem Sensor, welcher an dem zu verstellenden Bauteil angeordnet sein kann, verbunden ist, über den Signale betreffend die erforderliche Verstellung an den Rechner abgegeben werden. Damit kann in Abhängigkeit von der gewünschten Verstellung im Stellelement 2 die benötigte Wärme oder Kälte über den Halbleiterbaustein 8 in dem Teil 13 erzeugt werden und ist es dazu vorteilhaft, wenn das Stellelement 2, insbesondere der Teil 13, mit zumindest einem Temperaturfühler 16 versehen ist, der über eine Leitung 17 mit der datenverarbeitenden Recheneinheit in Verbindung steht. Es kann in der Folge damit die jeweilige Temperaturdifferenz zwischen einem in Abhängigkeit von der erforderlichen Längenänderung vorgegebenen Temperatursollwert und dem Istwert bestimmt werden, sodaß unter Berücksichtigung der Charakteristik des Halbleiterbausteins eine Regelung der Stellgröße erfolgen kann. Vorteilhaft ist es, wenn die Regelung über PID-Regler erfolgt und damit ein Schwingen der Regelstrecke vermieden werden kann.

Selbstverständlich können die einzelnen Leitungen 9, 17 auch als Bussystem ausgebildet sein, wodurch insbesondere der Vorteil erreicht werden kann, daß mit einem Leitrechner mehrere Halbleiterbausteine 8, sofern vorhanden, angesprochen werden können. Als Stellgröße kann die Temperaturdifferenz herangezogen werden.

Als Temperaturfühler können beispielsweise Widerstandsthermometer, z.B. Pt 100 Thermoelemente, z.B. Platin-Platinrhodium, Eisen-Kupfer, Chromnickel-Konstantan, Kupfer-Konstantan oder dgl. verwendet werden.

Des weiteren ist es natürlich auch möglich, die Längenänderung des Stellelementes 2 nicht indirekt über die Temperatur festzustellen, sondern z.B. mit Dehnmeßstreifen, welche aus dem Stand der Technik bekannt sind. Andere Verfahren sind selbstverständlich ebenfalls verwendbar.

Wie in Fig. 2 strichliert angedeutet, ist es möglich, das an der Stellvorrichtung 1 zumindest bereichsweise ein Isolierelement 18 angeordnet ist. Dieses Isolierelement 18 kann beispielsweise wiederum aus verschiedensten Keramiken, aus Glimmer oder dgl. gebildet sein und z.B. die Form einer Platte aufweisen. Isolierelemente 18 können an den beiden Längsseiten der Stellvorrichtung 1 in bezug auf die Längsmittelachse 7 angeordnet werden und wird dadurch eine entsprechende Isolierung des Stellelementes 2 von Temperatureinflüssen aus der Umgebung erreicht, sodaß Einflüsse auf die Stellgröße vermindert werden können. Es ist dadurch weiters möglich, insbesondere wenn an beiden Seiten der Stellvorrichtung 1 derartige Isolierelemente 18 angeordnet sind, daß ein Kanal 19 in Richtung der Längsmittelachse 7 entsteht. Vorteilhaft ist es, wenn das Isolierelement das Stellelement 2 in Richtung einer senkrecht auf die Längsmittelachse 7 stehenden Höhe 20 überragt, da es damit möglich wird, in diesem Kanal 19 zumindest ein zusätzliches Kühlelement 21 anzuordnen. Vorzugsweise ist das Kühlelement 21 so angebracht, daß der Halbleiterbaustein 8 zwischen dem Kühlelement 21 und dem Stellelement 2 angeordnet ist. Selbstverständlich ist es möglich, derartige Kühlelemente 21 auch ohne Isolierelemente 18 zu verwenden.

Das Kühlelement 21 kann von einem Kühlmedium durchströmt werden, beispielsweise einer Kühlflüssigkeit, bzw. ist es andererseits möglich, das Kühlelement 21 nicht in Form eines Blockes auszubilden, sondern beispielsweise mit Kühlrippen zu versehen, durch welche ein gasförmiges Kühlmedium strömen kann. Dabei kann eine Konvektion erzwungen werden, indem in zumindest einem Bereich einer Stirnfläche 22 des Stellelementes 2 bzw. des Teils 13 des Stellelementes 2 eine Fördereinrichtung 23 für Kühlmedien, z.B. ein Ventilator, angeordnet wird. Dieser Ventilator kann so ausgebildet sein, daß ein Montageelement des Ventilators zumindest teilweise eine hintere Abdeckung des Kanals 19 bildet. Von Vorteil ist es dabei weiters, wenn für den Fall, daß das Kühlelement 21 Kühlrippen aufweist, diese parallel zur Längsmittelachse 7 bzw. zum Kanal 19 ausgerichtet sind.

Die Fördereinrichtung 23 kann wiederum über eine Leitung 24 mit einer Energieversorgung verbunden sein bzw. ist es möglich, auch die Fördereinrichtung 23 an eine Datenverarbeitungsanlage anzubinden, sodaß die Leistung der Fördereinrichtung und damit der geförderte Volumenstrom an die jeweils notwendige abzuführende Wärme angepaßt werden kann.

Es sei in diesem Zusammenhang nicht unerwähnt, daß die Stellvorrichtung 1 selbstverständlich weitere Isolierelemente 18 bzw. Abdeckungen aufweisen kann, sodaß das Stellelement 2 bzw. der Teil 13 zu einem Großteil von Einflüssen aus der Umgebung der Stellvorrichtung 1 abgeschlossen ist und damit eine sehr genaue Regelung der Stellgröße "Temperaturdifferenz" möglich ist.

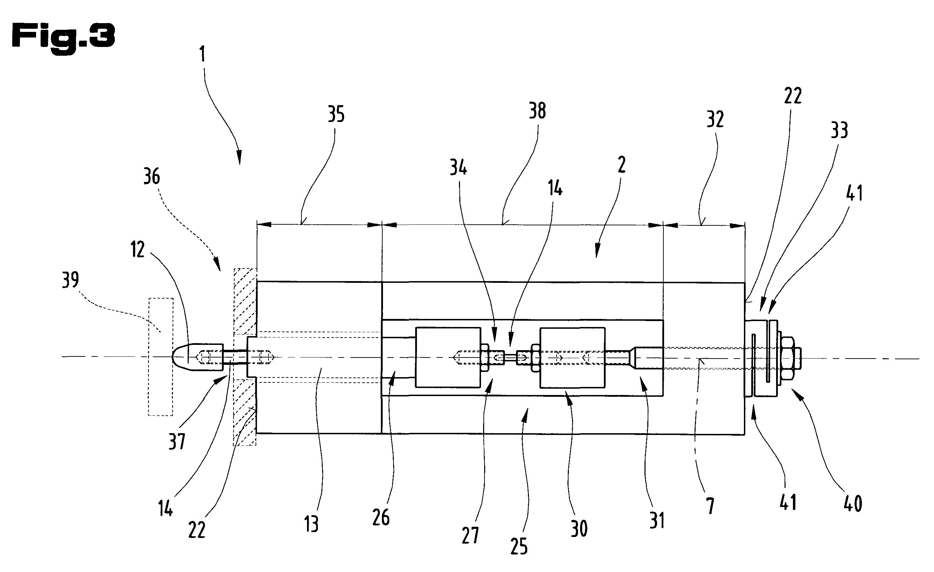

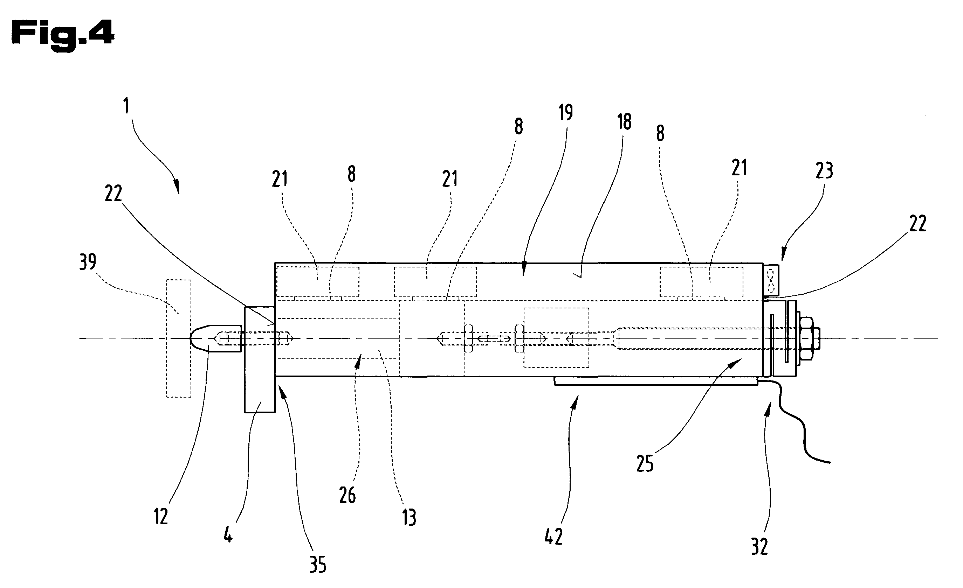

Die Fig. 3 und 4 zeigen schematisch vereinfacht eine weitere Ausführungsvariante der Stellvorrichtung 1 in Draufsicht bzw. Seitenansicht, wobei zur Erhöhung der Übersichtlichkeit die in Fig. 4 dargestellten Kühlelemente 21 in Fig. 3 nicht gezeigt sind und sich Fig. 3 vielmehr auf das wesentliche des Stellelementes 2 beschränkt. Selbstverständlich ist es aber auch möglich, auf die in Fig. 4 gezeigten Kühlkörper 21 zu verzichten.

Das Stellelement 2 nach Fig. 3 ist aus zumindest einem Druckelement 25 und zumindest einem Zugelement 26, beispielsweise einem Druckstab und einem Zugstab, gebildet. Das Druckelement 25 ist mit dem Zugelement 26 vorzugsweise über eine Gewindestange 27 verbunden, wobei diese Gewindestange 27 wiederum mehrteilig ausgeführt sein kann und die einzelnen Teile über die thermische Trennung 14 miteinander verbunden sein können. Vorzugsweise erfolgt die Verbindung des Druckelementes 25 mit dem Zugelement 26 nicht direkt, sondern über ein dazwischen angeordnetes Verstellelement 30, in welches eine Gewindespindel 31 eingreift, wobei letztere das Druckelement 25 in einem Endbereich 32 der Stellvorrichtung 1 durchsetzt und von einem Klemmelement 33 gehalten wird. Das Klemmelement 33 ist im Endbereich 32 der Stellvorrichtung 1 angeordnet. Das Zugelement 26 ist vorzugsweise mehrteilig, beispielsweise zweiteilig ausgeführt, wobei wiederum, wie bereits zu Fig. 2 beschrieben, der Teil 12 über die thermische Trennung 14 mit dem Teil 13 verbunden sein kann.

Das Zugelement 26 ist vorzugsweise in einer Ausnehmung 34 des Druckelementes 25 angeordnet, wobei die Ausnehmung 34 vorzugsweise, wie in Fig. 3 dargestellt, länglich ausgeformt ist und parallel zur Längsmittelachse 7 angeordnet ist. Für den Fall, daß das Druckelement U-förmig ausgebildet ist, kann zur besseren Führung in einem Anfangsbereich 35 der Stellvorrichtung 1, welcher dem Endbereich 32 entlang der Längsmittelachse 7 gegenüberliegend angeordnet ist, eine Abschlußeinrichtung 36, wie dies strichliert in Fig. 3 angedeutet ist, beispielsweise in eine Abschlußplatte mit einer Bohrung 37 angeordnet werden, wobei die Bohrung 37 an den Querschnitt des Teiles 12 und/oder 13 des Zugelementes 26 angepaßt werden kann.

Andererseits ist es selbstverständlich auch möglich, daß das Druckelement 25 nicht mit einem U-förmigen Querschnitt ausgebildet wird, sondern daß der Anfangsbereich 35 im wesentlichen seiner Ausbildung dem Endbereich 32 entspricht und die Bohrung 37 in diesem Anfangsbereich 35 des Druckelementes 25 zur Führung des Zugelementes 26 angeordnet ist. Damit kann sich die Ausnehmung 34 auf einen Mittelbereich 38 zwischen dem Anfangsbereich 35 und dem Endbereich 32 beschränken.

Selbstverständlich sind andere Geometrien des Stellelementes 2 möglich und sind diese vom Schutzumfang dieser Anmeldung mit umschlossen.

Durch die beschriebene und in Fig. 3 dargestellte Ausführungsvariante des Stellelementes 2 ist es mit Hilfe der Gewindespindel 31 möglich, eine Grobjustierung des Zugelementes 26 in bezug auf ein zu verstellendes Element 39 (in Fig. 3 strichpunktiert angedeutet) vorzunehmen, also die manuelle Zustellung des Stellelementes 26 durchzuführen.

Die Gewindespindel 31 kann aber weiters so ausgeführt sein, daß diese über deren Verlauf in Richtung der Längsmittelachse 7 zumindest zwei Gewinde mit unterschiedlichen Steigungen aufweist, wodurch eine entsprechende Feinjustierung des Zugelementes 26 möglich wird. Zwischen den beiden Gewindeteilen kann, wie aus dem Stand der Technik bekannt, ein Gewindefreistich angebracht sein. Bei entsprechender Ausgestaltung kann erreicht werden, daß bei manueller Verdrehung der Gewindespindel 31 über einen Spindelkopf 40, der beispielsweise in Form einer Sechskantmutter gebildet sein kann, die Längsverstellung des Zugelementes 26 über das Verstellelement 30 geringer ist, als es der Umdrehung des Spindelkopfes 40 entsprechen würde.

Es ist weiterhin vorteilhaft, wenn zwischen dem Druckelement 25 und dem Spindelkopf 40 der Gewindespindel 31 das in Fig. 3 gezeigte Klemmelement 33 angeordnet wird. Damit kann, insbesondere dann, wenn das Klemmelement 33 zumindest eine Ausnehmung 41, beispielsweise in Form eines Längsschlitzes, der sich über zumindest 50 %, vorzugsweise zumindest 60 %, insbesondere zumindest 70 %, beispielsweise zumindest 80 % des Querschnittes des Klemmelementes 33 erstreckt, aufweist und damit eine Art Feder gebildet wird, eine Vorspannung und damit Spielfreistellung der Gewindespindel 31 erreicht werden. Mit Hilfe des federähnlichen Klemmelementes 33 kann die Vorspannung selbst bei Wärmeausdehnungen des Druck- und/oder Zugelementes 25, 26 beibehalten werden.

Es sei an dieser Stelle darauf hingewiesen, daß es selbstverständlich möglich ist, auch an den Stirnflächen 22 im Anfangsbereich 35 bzw. Endbereich 32 der Stellvorrichtung 1 bzw. des Druckelementes 25 Isolierelemente 18 (in Fig. 3 nicht dargestellt) anzuordnen bzw. ist es weiterhin möglich, das Klemmelement 33 als Isolierelement 18 auszubilden.

Wie Fig. 4 zeigt, kann die Halteeinrichtung 4 im Anfangsbereich 35 bzw. im Bereich der diesem zugeordneten Stirnflächen 22 der Stellvorrichtung 1 angeordnet sein. Dadurch kann erreicht werden, daß bei entsprechender Wärmeerzeugung durch die Halbleiterbausteine 8, welche wiederum an der Oberfläche des Druckelementes 25 und/oder Zugelementes 26 angeordnet sein können, bzw. bei Stromumkehr und in der Folge Temperaturerniedrigung im Druckelement 25 eine Längenveränderung erzeugt wird, welche der Längenveränderung des Zugelementes 26, ebenfalls verursacht über zumindest einen Halbleiterbaustein 8, entgegengerichtet sein kann. So ist es beispielsweise möglich, daß bei Erwärmung des Teiles 13 des Zugelementes 26 dieses in Richtung auf das Element 39 bewegt wird und damit auf das Element 39 einen entsprechenden Druck bzw. eine entsprechende Kraft ausübt. Gleichzeitig kann das Druckelement 25 gekühlt werden, wodurch letztere eine Längenverminderung erfährt und damit der auf das Element 39 ausgeübte Druck vergrößert wird. Andererseits ist es natürlich möglich, daß bei gleichzeitiger Erwärmung des Druckelementes 25 und des Zugelementes 26 die Längenveränderungen einander entgegenwirken und damit eine feinere Justierung des auf das Element 39 auszuübenden Druckes möglich ist. Es soll damit verdeutlicht werden, daß je nach Anwendungsfall unterschiedlichste Regelungen mit der Stellvorrichtung 1 nach den Fig. 3 und 4 möglich sind und daß damit die Genauigkeit der Einstellung einer benötigten Verschiebung vergrößert werden kann bzw. die maximal aufzubringende Kraft bzw. der maximal aufzubringende Druck vergrößert werden kann.

Wie bereits zu Fig. 2 ausgeführt, kann der Teil 12 des Zugelementes 26 wiederum unterschiedlichste Formen und Geometrien aufweisen und ist diese nicht auf die in Fig. 3 gezeigten beschränkt.

Wie bereits ausgeführt und in Fig. 4 gezeigt, kann auch bei dieser Ausführungsvariante wiederum der Kanal 19 vorzugsweise oberhalb des Druckelementes 25 und Zugelementes 26 ausgebildet sein, beispielsweise mit Hilfe der Isolierelemente 18, welche die seitliche Abdekkung der Stellvorrichtung 1 bilden können. Des weiteren ist es möglich, daß im Bereich der Stirnflächen 22 im Endbereich 32 der Kanal 19 mit der Fördereinrichtung 23 bzw. einem zusätzlichen Abdeckelement und/oder Montageplatte, auf der die Fördereinrichtung 23 befestigt wird, abgeschlossen ist und kann durch diese Fördereinrichtung 23, beispielsweise durch einen Ventilator Kühlluft an den Kühlelementen 21 bzw. gegebenenfalls an diesen zugeordneten Kühlrippen vorbeigefördert werden.

Die Kühlelemente 21 sind vorzugsweise wiederum so angeordnet, daß die Halbleiterbausteine 8 zwischen dem Druckelement 25 bzw. Zugelement 26 angeordnet sind. Dem Zugelement 26 und dem Druckelement 25 können jeweils gesonderte Kühlelemente 21 zugeordnet werden, wobei das Kühlelement 21 des Zugelementes 26 an diesem so befestigt wird, daß eine gegebenenfalls manuelle Verstellung der relativen Position des Zugelementes 26 im Druckelement 25 nicht behindert wird.

Wie weiters aus Fig. 4 ersichtlich ist, kann die Verstellvorrichtung 1 anstelle einzelner Leitungen 9, 24 zur Energieversorgung auch ein zentrales Energieverbindungselement 42, beispielsweise eine Klemmleiste, für den elektrischen Anschluß aufweisen.

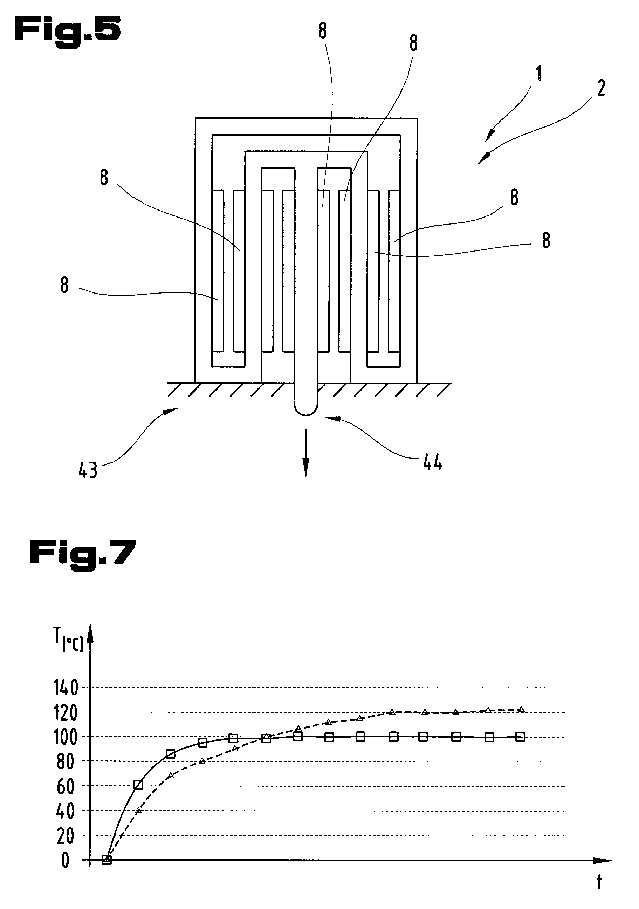

In Fig. 5 ist eine weitere Ausführungsvariante der Stellvorrichtung 1, insbesondere des Stellelementes 2, gezeigt. Bei dieser Ausführungsvariante bildet das Stellelement 2 wiederum im wesentlichen nur einen einzigen Teil, wobei darauf hingewiesen sein soll, daß selbstverständlich die thermischen Trennungen 14 vorhanden sein können. Das Stellelement 2 ist im wesentlichen meanderförmig ausgebildet, wobei zwischen den einzelnen Schlaufen die Halbleiterbausteine 8 angeordnet sein können. Damit kann wiederum erreicht werden, daß, wenn sich beispielsweise die Stellvorrichtung auf einer angedeuteten Ebene 43 abstützt, durch ein entsprechendes Zusammenspiel von Zug- und Druckkräften über einen Andrückbolzen 44, der einen Teil des Stellelementes 2 bilden kann, eine entsprechend eingestellte bzw. regulierte Druckkraft übertragen werden kann, wobei sich die übertragene Gesamtdruckkraft aus mehreren Einzelkräften, welche über die Längenveränderung in den einzelnen Teilbereichen des meanderförmigen Stellelementes 2 erhalten werden, zusammensetzt. Selbstverständlich können auch bei dieser Ausführungsvariante wiederum sämtliche zuvor beschriebenen Bauteile, wie thermische Trennungen 14, Kühlelemente 21, Isolierelemente 18 etc. (in Fig. 5 nicht dargestellt) vorhanden sein und wurden diese aus Gründen der Übersichtlichkeit nicht dargestellt.

Es soll mit dieser Ausführungsvariante auch aufgezeigt werden, daß die erfindungsgemäße Stellvorrichtung 1 nicht auf die in der Beschreibung beschriebenen und in den Fig. dargestellten Ausführungsvarianten beschränkt, sondern sich die Geometrie der Stellvorrichtung 1, insbesondere des Druckelementes 25 und/oder des Zugelementes 26 bzw. des Stellelementes 2 an die jeweiligen Erfordernisse bzw. die geforderten, maximalen zu übertragenden Kräfte angepaßt werden können und diese Ausführungsvarianten auch umfaßt sind.

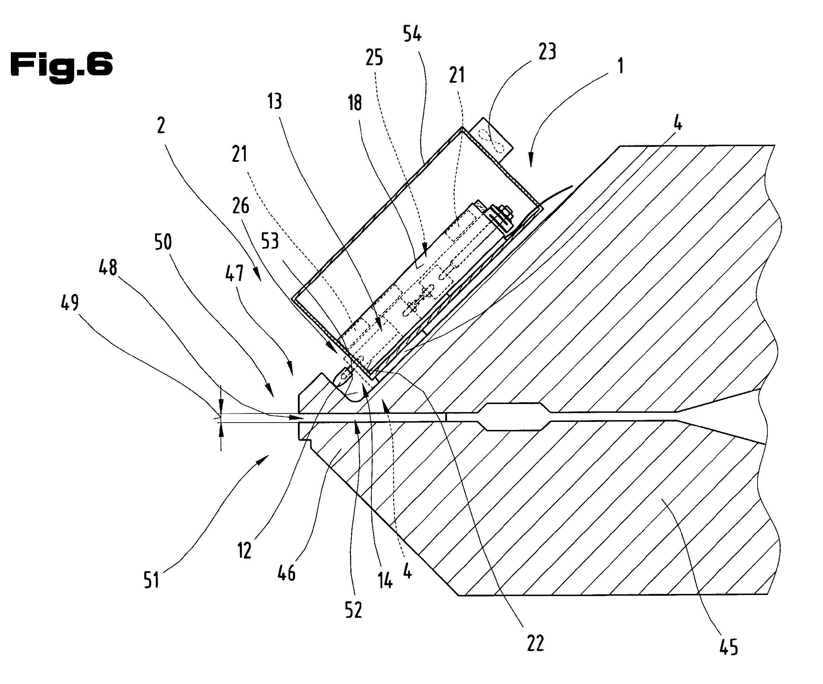

In Fig. 6 ist ein Anwendungsfall der erfindungsgemäßen Stellvorrichtung 1 in einer erfindungsgemäßen Düse 45 schematisch vereinfacht dargestellt. Die Düse 45 kann als Breitschlitzdüse zur Herstellung von Kunststoffolien ausgebildet sein. Es sind aber auch andere Ausführungsvarianten von verstellbaren Düsen möglich.

Die Düse 45 weist einen unteren Düsenteil 46 sowie einen oberen Düsenteil 47 auf. Die beiden Düsenteile 46, 47 sind beabstandet zueinander angeordnet, wodurch ein Austrittsspalt 48 mit einer Spalthöhe 49 definiert wird. Diese Spalthöhe 49 legt im wesentlichen die Dicke der damit hergestellten Kunststoffolie fest. Zur Veränderung der Spalthöhe kann zumindest einer der beiden Düsenteile 46, 47 im Bereich von Düsenlippen 50, 51 eine Querschnittsverjüngung 52 aufweisen. Dadurch kann erreicht werden, daß z.B. die Düsenlippe 50 des oberen Düsenteils 47 eine gewisse Verstellbarkeit aufweist.

Die Stellvorrichtung 1 ist nun an der Düse 45 derart angeordnet, daß das Stellelement 2, beispielsweise das Zugelement 26 bzw. der Teil 12, welcher wiederum vorzugsweise thermisch vom Teil 13 getrennt ist, an einer Stirnfläche 53 der Düsenlippe 50 im Bereich der Querschnittsverjüngung 52 anliegt. Die Stellvorrichtung 1 ist über die Halteeinrichtung 4, welche im Beispiel der Fig. 6 an der Unterseite der Stellvorrichtung 1 angebracht ist, am oberen Düsenteil 47 befestigt. Selbstverständlich ist es auch möglich, die Halteeinrichtung 4, wie dies in Fig. 6 strichliert dargestellt ist, an der Stirnfläche 22 der Stellvorrichtung 1 anzuordnen, um damit bei der Ausbildung des Stellelementes 2 mit dem Druckelement 25 und dem Zugelement 26 eine Abstützung des Druckelementes 25 und damit die entsprechende zusätzliche Kraftübertragung zu ermöglichen.

Je nach Festigkeit des Materials der Düse 45 können eine oder mehrere Stellvorrichtungen 1 in besagter Weise an der Düse 45 befestigt sein. Für den Fall, daß mehrere Stellvorrichtungen 1 verwendet werden, können diese von einem Gehäuse 54 umgeben sein, welches im Bereich der vorderen Stirnflächen 22 der Stellvorrichtung 1 entsprechende Bohrungen aufweisen kann, um den Durchtritt des Stellelementes 2 zu ermöglichen.

Das Gehäuse 54 kann weiters eine zusätzliche Fördereinrichtung 23, z.B. einen Ventilator für ein Kühlmedium, z.B. Luft, aufweisen. Damit kann im Gehäuse 54 eine weitestgehend angeglichene Temperaturverteilung erreicht werden und ist darüber hinaus eine auf das jeweilige Stellelement 2 angepaßte weitere Fördereinrichtung 23, wie vorab beschrieben, möglich, wobei letztere wiederum mit den Kühlelementen 21 in Strömungsverbindung stehen kann.

Aufgrund dieses Gehäuses 54 ist es weiterhin möglich, unter Umständen auf die beschriebenen Isolierelemente 18 zu verzichten, sodaß eine weitestgehende Vergleichmäßigung der Temperatur der Stellelemente 2 im gesamten Modul erreicht werden kann. Andererseits ist es natürlich möglich, mit Hilfe dieser Isolierelemente 18 wiederum eine gezielte Verstellung, d.h. Längenveränderung bestimmter Stellelemente 2 herbeizuführen, ohne daß dadurch Nachbarstellvorrichtungen mitbeeinträchtigt werden.

Durch die Längenänderung des Stellelementes 2 kann nun erreicht werden, daß die Spalthöhe 49 aufgrund der Druckausübung bei Längenvergrößerung verringert wird bzw., wenn aufgrund der umgekehrten Stromrichtung im Peltier-Element bzw. Peltier-Modul eine Kühlung des Stellelementes 2 hervorgerufen wird, daß die Spalthöhe 49 vergrößert wird, indem sich das Stellelement 2 zusammenzieht und damit verkürzt.

Es ist weiters von Vorteil, wenn das vordere an der Düsenlippe 50 angreifende Ende des Stellelementes mit gerundeter Oberfläche ausgeführt ist, da damit einerseits die Kontaktfläche zwischen der im Betrieb üblicherweise heißen Düse 45 und dem Stellelement 2 und somit der Eintrag von Wärme in das Stellelement 2 verringert werden kann. Wie bereits erwähnt, kann dieser Effekt zusätzlich durch die thermische Trennung 14 weiter verringert werden. Darüber hinaus kann durch diese gerundete Ausführung auch eine mögliche Beschädigung der Düsenlippe 50 weitestgehend verhindert werden.

Bei der Herstellung von Kunststoffolien wird aus verschiedensten Gründen auf eine gleichmäßige Dicke der Kunststoffolie geachtet. Ein Grund dafür ist einerseits, daß eine gleichbleibende Qualität dem Abnehmer zur Verfügung gestellt werden soll und andererseits kann damit auch eine Materialersparnis erreicht werden, indem auf eine zu dicke Kunststoffolie rasch reagiert werden kann. Zur Messung der Kunststoffolie kann nach der Düse 45 eine Dickenmeßeinrichtung, wie aus dem Stand der Technik bekannt, angeordnet sein und mit einer zentralen Recheneinheit verbunden sein. Aus den Signalen des Dickenmeßgerätes bzw. der Abweichung vom Istwert der Dicke der Kunststoffolie kann mit Hilfe der Recheneinheit in Abstimmung mit der Charakteristik des Halbleiterbausteins 8 ein entsprechender Sollwert für die Temperatur im Stellelement 2 und damit in der Folge für die Stellung der Düsenlippe 50 in bezug auf die Düsenlippe 51 errechnet werden. Die Regelung erfolgt vorzugsweise, wie bereits erwähnt, über sogenannte PID-Regler.

Selbstverständlich sind weitere Kenndaten, z.B. Stoffgrößen, wie die Wärmedehnung der verwendeten Materialien mitzuberücksichtigen.

Es ist des weiteren möglich, daß die Regelung des zugeführten Stromes nicht über die absolute Temperatur erfolgt, sondern über die Temperaturdifferenz zwischen der Isttemperatur und der Solltemperatur.

Zur Messung der Temperatur können auch bei dieser Ausführungsvariante wiederum an entsprechenden Stellen Temperaturfühler 16 (in Fig. 6 nicht dargestellt) angeordnet sein.

Der Vorteil, der sich damit erreichen läßt, ist ein geschlossener Regelkreis zur Temperierung der Stellelemente 2. Durch eine optimale Temperaturreglereinstellung ist das Stellelement 2 im Vergleich zu bereits aus dem Stand der Technik bekannten Stellelementen 2 schneller am Temperatur- bzw. Längensollwert. Durch die PID-Regelung wird ein Überschwingen nach Erreichen der Sollänge vermieden und muß daher die Querprofilregelung nicht dauernd nachregeln. Dadurch wird die gesamte Regelcharakteristik sehr stabil.

Zum Vergleich ist in Fig. 7 eine Gegenüberstellung des Temperaturverlaufes in einer erfindungsgemäßen Stellvorrichtung 1 im Vergleich zu einer mittels Heizpatrone geheizten Stellvorrichtung gezeigt. Es ist dabei auf der Abszisse die Zeit und auf der Ordinate die Temperatur aufgetragen. Außerdem liegt die Annahme zugrunde, daß beide Stellelemente einen Sollwert von 100° C haben sollen. Es wird deutlich, daß durch die erfindungsgemäße Regelung und durch das erfindungsgemäße Stellelement 2 die Solltemperatur schneller erreicht wird und danach stabil bleibt (durchgezogene Linie).

Die Stellgröße der Halbleiterbausteine 8, insbesondere der Peltier-Elemente bzw. Peltier-Module ist eine analoge Spannung, welche von der zugehörigen Regelung erzeugt wird. Die Analoge Stellgröße besitzt eine weitaus höhere Auflösung als die getaktete Stellgröße der Heizpatronen, erzeugt durch sogenannte "Solid-State-Relais".

Vorteilhaft ist es weiters, wenn die Temperaturwerte und die Messung der Stromaufnahme an jeder Stellvorrichtung 1 bei Verwendung mehrerer für die Verstellung der Düse 45 erfaßt werden, da dadurch auch eine Diagnose, um eventuelle Schäden oder Fehler zu überwachen, z.B. Leitungsbrüche, Grenztemperaturen, Peltier-Defekt oder dgl., möglich wird.

Es ist weiters von Vorteil, daß die Veränderung der Spalthöhe 49 während der Produktion erfolgen kann und diese Veränderung im Vergleich zu Stellvorrichtungen aus dem Stand der Technik relativ groß ist, beispielsweise im Bereich von ca. 0,7 mm bis 1,0 mm, da dadurch im Zusammenhang mit der kurzen Regelzeit und Verstellzeit während der Produktion der Reinigung der Düsenlippen 50, 51 durch z.B. Abstreifer möglich ist, indem die übertragende Kraft bzw. der übertragene Druck verringert wird und damit die Spalthöhe 49 vergrößert wird und nach der Reinigung auf die eingestellten Werte sehr rasch zurückgestellt werden kann.

Ein weiterer Vorteil, der sich mit Hilfe des geschlossenen Regelkreises erzielen läßt ist, daß die unterschiedliche Charakteristik der einzelnen Halbleiterbausteine 8, insbesondere der Peltier-Elemente bzw. Peltier-Module, verursacht durch die Anordnung zur Gänze ausgeglichen werden kann.

Ein möglicher Verstellbereich des Stellelementes 2 liegt z.B. im Bereich zwischen - 600 µm bis + 800 µm, insbesondere zwischen - 500 µm bis + 700 µm, vorzugsweise zwischen- 400 µm und + 500 µm, beispielsweise im Bereich zwischen - 300 µm und + 400 µm.

Dadurch läßt sich auf vorteilhafte Weise erreichen, daß die Leistungsaufnahme bei 0 µm Verstellbereich 0 Watt beträgt. Im Vergleich dazu müssen Stellelemente mit Heizpatronen nach dem Stand der Technik in etwa 50 % ihrer Heizleistung ständig erbringen, um eine Regelung nach beiden Richtungen zu ermöglichen, d.h. daß ständig ein unnötiger Energieverbrauch auftritt.

Die Verstellgeschwindigkeit von der maximalen positiven bis zur maximalen negativen Länge kann im Bereich von ca. 5 Minuten liegen und ist damit entsprechend rascher als die Verstellgeschwindigkeit bei Stellelementen 2 nach dem Stand der Technik.

Die manuelle Feinverstellung kann im Bereich von +/- 5 mm, vorzugsweise +/- 4 mm, insbesondere +/- 3 mm, beispielsweise +/- 2 mm betragen, mit einer Auflösung von z.B. 0,5 mm pro Umdrehung der Gewindespindel 31, wobei letzterer Wert in Abhängigkeit von der Auslegung der beiden unterschiedlichen Gewinde zu sehen ist.

Die Stellelemente 2 können eine Einsatztemperatur von beispielsweise 150° C aufweisen, wobei diese Temperatur selbstverständlich in Abhängigkeit von den verwendeten Werkstoffen zu sehen ist.

Des weiteren kann eine Verstellkraft in axialer Richtung, d.h. also in Richtung der Längsmittelachse 7 maximal 6000 N, vorzugsweise 5000 N, insbesondere 4500 N, beispielsweise 4000 N betragen, wobei dies wiederum nur beispielhafte Angaben sind und die tatsächlichen Kräfte in Abhängigkeit von der Geometrie und der jeweiligen Ausführung des Stellelementes 2 - wie oben dargelegt - sowie in Abhängigkeit von der Werkstoffwahl zu sehen ist.

Das Stellelement 2 nach der Erfindung kann aber auch als Zug- und Druckelement ausgeführt sein, beispielsweise wenn bei dem zu verstellenden Bauteil, wie z.B. der Düsenlippe, eine Befestigungsmöglichkeit vorhanden ist, z.B. ein Haken, eine Öse oder dgl., die sowohl die Zug- als auch die Druckbeaufschlagung überträgt.

Es sei abschließend nochmals darauf hingewiesen, daß die erfindungsgemäße Stellvorrichtung 1 nicht ausschließlich zur Veränderung der Spalthöhe 49 bei Düsen 45 verwendet werden kann. Andere Einsatzgebiete sind beispielsweise Werkzeugmaschinen mit verschleißenden Werkzeugen, wo mit Hilfe der erfindungsgemäßen Stellvorrichtung eine Nachstellung des Werkzeuges durchgeführt werden kann. Andere Einsatzgebiete sind selbstverständlich auch denkbar.

Der Ordnung halber sei abschließend darauf hingewiesen, daß zum besseren Verständnis der Stellvorrichtung 1 deren Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

Vor allem können die einzelnen in den Fig. 1; 2; 3, 4; 5; 6; 7 gezeigten Ausführungen und Maßnahmen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1: Stellvorrichtung
- 2: Stellelement
- 3: Heiz- und/oder Kühleinrichtung
- 4: Halteeinrichtung
- 5: Pfeil

- 6: Druckbereich
- 7: Längsmittelachse
- 8: Halbleiterbaustein
- 9: Leitung
- 10: Profil

- 11: Schenkel
- 12: Teil
- 13: Teil
- 14: Trennung
- 15: Innengewinde

- 16: Temperaturfühler
- 17: Leitung
- 18: Isolierelement
- 19: Kanal
- 20: Höhe

- 21: Kühlelement
- 22: Stirnfläche
- 23: Fördereinrichtung
- 24: Leitung
- 25: Druckelement

- 26: Zugelement
- 27: Gewindestange
- 28 29 30: Verstellelement

- 31: Gewindespindel
- 32: Endbereich
- 33: Klemmelement
- 34: Ausnehmung
- 35: Anfangsbereich

- 36: Abschlußeinrichtung
- 37: Bohrung
- 38: Mittelbereich
- 39: Element
- 40: Spindelkopf

- 41: Ausnehmung
- 42: Energieverbindungselement
- 43: Ebene
- 44: Andrückbolzen
- 45: Düse

- 46: Düsenteil
- 47: Düsenteil
- 48: Austrittsspalt
- 49: Spalthöhe
- 50: Düsenlippe

- 51: Düsenlippe
- 52: Querschnittsverjüngung
- 53: Stirnfläche
- 54: Gehäuse

## Patentansprüche

1. Stellvorrichtung, insbesondere zur Kraftübertragung, mit einer Halteeinrichtung, z.B. einer Montageplatte, und zumindest einem, vorzugsweise längenveränderlichen Stellelement sowie mit zumindest einer Heiz- und/oder Kühleinrichtung, **dadurch gekennzeichnet, daß** die mit dem Stellelement (2) in Wirkverbindung stehende Heiz- und/oder Kühleinrichtung (3) als Halbleiterbaustein (8), insbesondere als Peltier-Element, ausgebildet ist.

2. Stellvorrichtung nach Anspruch 1, **dadurch gekennzeichnet, daß** das Stellelement (2) aus zumindest einem Zugelement (26), z.B. einem Zugstab, und zumindest einem Druckelement (25), z.B. einem Druckstab, gebildet ist.

3. Stellvorrichtung nach Anspruch 2, **dadurch gekennzeichnet, daß** das Druckelement (25) in Längsrichtung eine Ausnehmung (34) aufweist, in der das Zugelement (26), vorzugsweise in Längsrichtung, beweglich angeordnet und mit dem Druckelement (25) verbunden ist.

4. Stellvorrichtung nach einem der vorhergehenden Ansprüche, **dadurch gekennzeichnet, daß** das Druckelement (25) eine Längsmittelachse (7) aufweist und die Ausnehmung (34) entlang dieser Längsmittelachse (7) angeordnet ist.

5. Stellvorrichtung nach einem der vorhergehenden Ansprüche, **dadurch gekennzeichnet, daß** das Druckelement (25) thermisch vom Zugelement (26) getrennt ist.

6. Stellvorrichtung nach einem der vorhergehenden Ansprüche, **dadurch gekennzeichnet, daß** das Stellelement (2) bzw. das Zugelement (26) zumindest zweiteilig ausgebildet ist und die beiden Teile (12, 13) thermisch voneinander getrennt verbunden sind.

7. Stellvorrichtung nach einem der vorhergehenden Ansprüche, **dadurch gekennzeichnet, daß** ein temperierter Teil (13) des Zugelementes (26) zumindest teilweise von der Ausnehmung (34) des Druckelementes (25) aufgenommen ist.

8. Stellvorrichtung nach einem der vorhergehenden Ansprüche, **dadurch gekennzeichnet, daß** die thermische Trennung (14) aus einem Keramikbauteil, z.B. einer Gewindestange aus Keramik gebildet ist.

9. Stellvorrichtung nach einem der vorhergehenden Ansprüche, **dadurch gekennzeichnet, daß** das Stellelement (2) bzw. das Zugelement (26) und/oder das Druckelement (25) zumindest teilweise von zumindest einem Isolierelement (18) umgeben sind.

10. Stellvorrichtung nach einem der vorhergehenden Ansprüche, **dadurch gekennzeichnet, daß** je ein Isolierelement (18) in bezug auf die Längsmittelachse (7) seitlich am Stellelement (2) bzw. Druckelement (25) angeordnet ist.

11. Stellvorrichtung nach einem der vorhergehenden Ansprüche, **dadurch gekennzeichnet, daß** zumindest ein Isolierelement (18) an zumindest einer von in bezug auf die Längsmittelachse (7) einander gegenüberliegenden Stirnflächen (22) des Stellelementes (2) bzw. des Druckelementes (25) angeordnet ist.

12. Stellvorrichtung nach einem der vorhergehenden Ansprüche, **dadurch gekennzeichnet, daß** das Isolierelement (18) aus zumindest einem Werkstoff aus einer Glimmer, Keramik, Glaskeramik, Polymerwerkstoffe enthaltenden Gruppe gebildet ist.

13. Stellvorrichtung nach einem der vorhergehenden Ansprüche, **dadurch gekennzeichnet, daß** das seitlich angeordnete Isolierelement (18) das Stellelement (2) bzw. das Druckelement (25) in Richtung einer Höhe (20) überragt und dadurch ein parallel zur Längsmittelachse (7) verlaufender Kanal (19) ausgebildet wird.

14. Stellvorrichtung nach einem der vorhergehenden Ansprüche, **dadurch gekennzeichnet, daß** in dem Kanal (19) zumindest ein Kühlelement (21), insbesondere mit Kühlrippen angeordnet ist.

15. Stellvorrichtung nach einem der vorhergehenden Ansprüche, **dadurch gekennzeichnet, daß** die Kühlrippen parallel zum Kanal (19) angeordnet sind.

16. Stellvorrichtung nach einem der vorhergehenden Ansprüche, **dadurch gekennzeichnet, daß** dem Stellelement (2) bzw. dem Zug- und dem Druckelement (26, 25) jeweils zumindest ein gesondertes Kühlelement (21) zugeordnet ist.

17. Stellvorrichtung nach einem der vorhergehenden Ansprüche, **dadurch gekennzeichnet, daß** der Halbleiterbaustein (8) zwischen dem Kühlelement (21) und dem Stellelement (2) bzw. dem Druck- bzw. Zugelement (25, 26) angeordnet ist.

18. Stellvorrichtung nach einem der vorhergehenden Ansprüche, **dadurch gekennzeichnet, daß** am Stellelement (2) bzw. am Druck- und/oder Zugelement (25, 26) ein Temperaturfühler (16), z.B. ein Widerstandsthermometer, ein Thermoelement, angeordnet ist.

19. Stellvorrichtung nach einem der vorhergehenden Ansprüche, **dadurch gekennzeichnet, daß** am Stellelement (2) bzw. am Druck- und/oder Zugelement (25, 26) bzw. am Halbleiterbaustein (8) zumindest ein Sensor zur Messung der Stromaufnahme angeordnet ist.

20. Stellvorrichtung nach einem der vorhergehenden Ansprüche, **dadurch gekennzeichnet, daß** am Stellelement (2) bzw. am Druck- und/oder Zugelement (25, 26) zumindest ein Dehnmeßstreifen angeordnet ist.

21. Stellvorrichtung nach einem der vorhergehenden Ansprüche, **dadurch gekennzeichnet, daß** an zumindest einer Stirnfläche (22) des Stellelementes (2) bzw. des Druck- und/ oder Zugelementes (25, 26) zumindest eine Fördereinrichtung (23) für Kühlmedien, z.B. ein Ventilator angeordnet ist.

22. Stellvorrichtung nach einem der vorhergehenden Ansprüche, **dadurch gekennzeichnet, daß** das Zugelement (26) über eine Gewindespindel (31) mit unterschiedlichen Gewindesteigungen mit dem Druckelement (25) verbunden ist.

23. Stellvorrichtung nach einem der vorhergehenden Ansprüche, **dadurch gekennzeichnet, daß** an der hinteren, dem Zugelement (26) gegenüberliegenden Stirnfläche des Druckelementes (25) ein Klemmelement (33) angeordnet ist, welches von der Gewindespindel (31) durchsetzt ist.

24. Stellvorrichtung nach einem der vorhergehenden Ansprüche, **dadurch gekennzeichnet, daß** das Klemmelement (33) zumindest eine, senkrecht auf die Längsmittelachse (7) stehende Ausnehmung (41) aufweist, welche sich über zumindest die Hälfte des Querschnittes des Klemmelementes (33) erstreckt.

25. Stellvorrichtung nach einem der vorhergehenden Ansprüche, **dadurch gekennzeichnet, daß** der Halbleiterbaustein (8) mit einem PID-Regler verbunden ist.

26. Düse, insbesondere Breitschlitzdüse eines Extruders, bestehend aus einem oberen und einem unteren Düsenteil mit Düsenlippen, die einen Austrittsspalt oben und unten begrenzen, wobei zumindest eine der beiden Düsenlippen, vorzugsweise die obere, in einem vorderen Endbereich flexibel ausgebildet ist und sich auf diesem vorderen Endbereich zumindest eine Stellvorrichtung abstützt, die vorzugsweise am oberen Düsenteil befestigt ist, **dadurch gekennzeichnet, daß** die Stellvorrichtung (1) nach einem der vorhergehenden Ansprüche gebildet ist.

27. Düse nach Anspruch 26, **dadurch gekennzeichnet, daß** die Stellvorrichtung (1) über eine Halteeinrichtung (4) am oberen Düsenteil (47) befestigt ist und die Halteeinrichtung (4) an der vorderen Stirnfläche (22) der Stellvorrichtung (1) angeordnet ist.

28. Düse nach Anspruch 26 oder 27, **dadurch gekennzeichnet, daß** über eine Länge der Düsenlippe (50, 51) mehrere Stellvorrichtungen (1) angeordnet sind, wobei sich die Anzahl nach der Steifigkeit des Werkstoffes des oberen und/oder unteren Düsenteils (47, 46) richtet.

29. Düse nach einem der vorhergehenden Ansprüche 26 bis 28, **dadurch gekennzeichnet, daß** die Stellvorrichtung(en) (1) von einem Gehäuse (54) umgeben ist (sind), welches in Richtung der Düsenlippe (50) von dem (den) Stellelement(en) (2), insbesondere dem Zugelement (26), durchsetzt ist.

30. Düse nach einem der vorhergehenden Ansprüche 26 bis 29, **dadurch gekennzeichnet, daß** die thermische Trennung (14) der zumindest zwei Teile (12, 13) des Zugelementes (26) im Bereich des Durchbruches des Zugelementes (26) durch das Gehäuse (54) angeordnet ist.

31. Düse nach einem der vorhergehenden Ansprüche 26 bis 30, **dadurch gekennzeichnet, daß** in oder an dem Gehäuse (54) zumindest eine Fördereinrichtung (23) für ein Kühlmedium, z.B. ein Ventilator, angeordnet ist.

32. Düse nach einem der vorhergehenden Ansprüche 26 bis 31, **dadurch gekennzeichnet, daß** das vordere, an der Düsenlippe (50) anliegende Ende des Stellelementes (2) bzw. des Zugelementes (26) gerundet ausgeführt ist.

33. Düse nach einem der vorhergehenden Ansprüche, **dadurch gekennzeichnet, daß** der Temperaturfühler (16) mit einem Rechner verbunden ist.

34. Düse nach einem der vorhergehenden Ansprüche, **dadurch gekennzeichnet, daß** der Rechner mit einer Dickenmeßeinrichtung verbunden ist.

35. Verfahren zur Veränderung der Breite eines Austrittsspaltes einer Düse, insbesondere einer Breitschlitzdüse, bei dem durch Temperaturänderung eine Längenänderung eines auf einen Düsenteil wirkenden Stellelementes einer Stellvorrichtung verursacht und damit auf den Düsenteil eine veränderbare Kraft ausgeübt wird, **dadurch gekennzeichnet, daß** zur Temperaturänderung eine Stellvorrichtung nach einem der Ansprüche 1 bis 25 verwendet wird.
